## Europäisches Patentamt
## European Patent Office
## Office européen des brevets

(19)

(11) Veröffentlichungsnummer: **0 001 447**
**B1**

(12) **EUROPÄISCHE PATENTSCHRIFT**

(45) Veröffentlichungstag der Patentschrift: **19.08.81**

(51) Int. Cl.³: **B 23 K 1/00**

(21) Anmeldenummer: **78101069.9**

(22) Anmeldetag: **05.10.78**

(54) Verfahren zum flussmittelfreien Hartlöten oder Schweissen von Aluminium.

(30) Priorität: **05.10.77 US 839707**

(43) Veröffentlichungstag der Anmeldung:
**18.04.79 Patentblatt 79/8**

(45) Bekanntmachung des Hinweises auf die Patenterteilung:
**19.08.81 Patentblatt 81/33**

(84) Benannte Vertragsstaaten:
**BE DE FR GB**

(56) Entgegenhaltungen:
DE - A - 1 508 341
FR - A - 2 287 963
US - A - 3 482 305
US - A - 3 941 299
US - A - 3 979 042

(73) Patentinhaber: FORD-WERKE
AKTIENGESELLSCHAFT
Ottoplatz 2 Postfach 210369
D-5000 Köln 21 (DE)
(73) Patentinhaber: FORD MOTOR COMPANY LIMITED
Eagle Way
Brentwood Essex CM13 3BW (GB)
(73) Patentinhaber: FORD FRANCE SOCIETE
ANONYME
344 Avenue Napoleon Bonaparte B.P. 307
F-92506 Rueil Malmaison Cedex (FR)

(72) Erfinder: Winterbottom, Walter Leon
26360 Power Road Farmington Hills
Michigan 48 018 (US)

(74) Vertreter: Kohler, Anton, Dr. et al,
Dr.A.Kohler + M.Schroeder Patentanwälte Franz-
Joseph-Strasse 48
D-8000 München 40 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

### Verfahren zum flußmittelfreien Hartlöten oder
### Schweißen von Aluminiumteilen

Aufgrund der abnehmenden Lieferungen von Kupfer, das gewöhnlich in Kraftfahrzeugwärmeaustauschern angewandt wird, wurde Aluminium als Alternativematerialquelle wichtig. Jedoch stellt bei einer Anzahl von Verfahren, die bei der Herstellung von Aluminiumteilen angewandt werden, wie bei dem in einem Kraftfahrzeugwärmeaustauscher erforderlichen Schweißen oder Hartlöten, die Stabilität des auf dem Aluminium vorliegenden Oberflächenoxidfilmes eine ausgeprägte Hemmung dar. Beim Hartlöten oder Schweißen wirkt der Film als Sperrschicht für die Benetzung und für die Strömung der für die Stoßausbildung erforderlichen Füllstoffmetallegierung oder des Hartlotes. Die Oxidentfernung und die Verhinderung der erneuten Oxidation sind die Haupterfordernisse für ein erfolgreiches Aluminiumverbindungsverfahren.

Das flußmittelfreie Hartlöten oder Schweißen oder das Vakuumhartlöten oder -schweißen gewann erhebliche technische Bedeutung, da hierbei nicht die Entfernung des Flußmittelrückstandes erforderlich ist und die Anfälligkeit für wäßrige Korrosion der Teilchen mit diesem Flußmittelrückstand verringert wird. Die Vakuumhartlötung oder -schweißung oder die flußmittelfreie Hartlötung oder Schweißung umfaßt im wesentlichen, daß die für das Hartlöten oder Verschweißen zusammengesetzte Struktur in einen Heizofen eingebracht wird, wobei ein Füllstoffmetall an den zu verbindenden Stellen angebracht ist. Der Ofen wird auf einen Vakuumwert von etwa $1,3 \cdot 10^{-2}$ Pa bis $1,3 \cdot 10^{-3}$ Pa evakuiert und gleichzeitig auf eine Temperatur oberhalb des Schmelzpunktes des Füllstoffmetalles, jedoch unterhalb des Schmelzpunktes des zu verbindenden Grundmetalles erhitzt. Es ist üblich, einen Ofen anzuwenden, welcher mit einer Geschwindigkeit von etwa 15°C/min erhitzt, so daß der gesamte Hartlöt- oder Schweißarbeitsgang innerhalb eines Zeitraumes von etwa 15 bis 18 min bewirkt ist.

Obwohl in den meisten Fällen das Vakuumhartlöten oder -schweißen einen gesunden Stoß ergibt, gibt es Fälle, wo bestimmte Bestandteile der Dampfphase innerhalb der Ofenatmosphäre das Hartlöt- oder Schweißverhalten schädigen. Die Schädigung erfolgt während der Stufe, wo der Promotor mit dem Oxidfilm reagiert, und später, wenn Kapillarkräfte mindestens einen Teil der verflüssigten Füllstoffmetalllegierung durch den Oxidfilm zu ziehen trachten. Trotz der Anwesenheit von Promotormitteln zur Erleichterung der Benetzung des Oxidfilmes wirkt das Vorhandensein derartiger Bestandteile der Dampfphase dem günstigen Effekt der Promotormittel entgegen.

Die Aufgabe der Erfindung besteht in einem verbesserten Verfahren zum flußmittelfreien Hartlöten oder Schweißen von Aluminiumkomponenten mit erhöhter Wirtschaftlichkeit und niedrigeren Kapitalkosten, sowie mit einer perfekteren Hartlötung oder Schweißung. Für den Fall einer Vakuum umgebung ergibt sich die Wirtschaftlichkeit teilweise aus den verringerten Erfordernissen für die für das Verfahren erforderliche Vakuumapparatur. Die Erfordernisse werden hierbei durch die Anwendung eines Pumpsystems für ein niedriges Vakuum, welches ein Vakuumniveau von etwa 0,13 Pa einstellt, entgegengesetzt zu den Erfordernissen für ein höheres Vakuum gemäß dem Stand der Technik, wo normalerweise der Bereich von $1,3 \cdot 10^{-3}$ Pa angewandt wird, erniedrigt.

Ein Vorteil der Erfindung besteht darin, dass sie zur Steuerung von $O_2$ und $H_2O$ während der Vakuumhartlötung oder -schweißung wirksam ist, so daß diese Gasarten keine Störungen bei der Benetzung des Oxidfilmes und der begleitenden Schädigung des Hartlötoder Schweißverhaltens ergeben.

Die Merkmale im Hinblick auf die Aufgabenstellung umfassen (a) Isolierung einer kritischen Temperaturzone, durch die die hart zu lötende Struktur erhitzt werden muß, wobei diese kritishe Temperaturzone in Beziehung zu dem Zustand steht, währenddessen der Aluminiumoxidfilm porös wird und währenddessen die Promotormittel oder Fangmittel der Füllstoffmetallegierung chemisch mit dem Oxidfilm zur Förderung der Benetzung reagieren und währenddessen eine Dochtwirkung der geschmolzenen Hartlöt- oder Schweißfüllstoffmetallegierung durch diese Porosität stattfindet, wobei der kritische Bereich auf 400 bis 565°C für eine Füllstoffmetallegierung, welche Magnesium enthält, isoliert wird, (b) Steuerung der Erhitzungsgeschwindigkeit der hart zu lötenden oder zu schweißenden Anordnung, wenn sie durch die kritische Temperaturzone geht, wobei diese Erhitzungsgeschwindigkeit mindestens 100°C je min beträgt.

Der Oberflächenfilm eines Aluminiumteils oder einer Aluminiumlegierung stellt in vielen Gesichtspunkten den Schlüssel für die Eigenschaften und mögliche Brauchbarkeit dieses Materials dar. Der Film stellt ein feuerfestes Oxid dar, das gewöhnlich dünn und sich selbst erneuernd ist, und deckt den Teil der Oberfläche ab, wodurch eine Inertheit für dieses sonst hoch reaktive Metall erhalten wird. Beim Hartlöten oder Schweißen wirkt der Oxidfilm als Sperrschicht für die zur Stoßausbildung erforderliche Benetzung und Strömung. Beim Vakuumhartlöten oder -schweißen ist der Mechanismus zur Entfernung der Oxidsperrschicht bis jetzt nicht vollständig geklärt. Entsprechend den im Rahmen der vorliegenden Erfindung gewonnenen Erkenntnissen wird jetzt angenommen, daß die Promotormittel, welche zur Verringerung des Aluminiumoxidfilmes fähig sind und welche gleichzeitig zur Wirkung als Einfangmittel für Sauerstoff und Wasser in der Hartlöt- oder Schweißkammer fähig sind, angewandt werden müssen. Der Promotor oder das Einfangmittel werden in die Fullstoffmetallegierung als ternäre Zugabe einverleibt, so daß die Füllstoffmetallegierung zur Durchführung der Schweißung oder Hartlötung des Aluminiums aus einer Aluminium-Silicium-Promotor-Legierung bestehen kann. In

2

**0 001 447**

zahlreichen Fällen stellt Magnesium den am stärksten bevorzugten Promotor dar. Eine der wichtigsten Eigenschaften des Promotors, insbesondere des Magnesiums, ist dessen hohe Flüssigkeit bei Temperaturen weit unterhalb des eutektischen Schmelzpunktes der Füllstoffmetallegierung. Magnesium beispielsweise hat einen Dampfdruck von etwa 0,13 Pa bei 300°C.

Im Rahmen der Erfindung besteht die Füllstoffmetallegierung im wesentlichen in einer Ausführungsform aus einer Aluminium-Silicium-Magnesium-Legierung, wobei das Metall an den Stoßstellen für die Anordnung abgeschieden wird. Ganz allgemein besteht die Füllstoffmetallegierung aus einer Grundlage aus Aluminium mit einem Gehalt eines Promotor- oder Einfangmittels aus der Gruppe von Magnesium, seltenen Erdmetallen, Beryllium, Scandium, Yttrium, Calcium, Strontium und Lithium.

Der Damptransport des Magnesiumdampfes durch den Oxidfilm ist nicht vollständig verständlich und insbesondere nicht in Verbindung mit der Zeitgebung, wie sich die Porosität im Oxidfilm entwickelt. Ein Promotor wie Magnesium beeinflußt die Ausbildung der Porosität. Es wird angenommen, daß Magnesium eine Änderung der amorphen Oxidstruktur zu einer solchen Struktur, welche eine kristalline Körperphase besitzt, einleitet, wobei sich diese Änderung bei niedrigerer Temperatur induziert.

Im Rahmen der Erfindung wurde jedoch gefunden, daß die Porosität im Oxidfilm ein Nachteil sein kann, falls sie nicht zum rechten Zeipunkt inder Hartlöt- oder Schweißungsfolge auftritt. Ganz grob ist die Porosität lediglich dann günstig, nachdem das Füllstoffmetalle geschmolzen ist; in dieser Stufe reagiert das Magnesium mit dem Oxidfilm und leitet eine Dochtwirkung des Füllstoffmetalles in den Film ein, so daß der Film aufbricht, zerfällt und sich auflöst; dies erlaubt die anschließende Benetzung des Aluminiumgrundmetalles. Dieser Rolle der Porosität wirkt jedoch die Anwesenheit von Spurenmengen an $O_2$ oder $H_2O$ in der Vakuumkammer entgegen. Falls die Porosität in dem Film kurz vor der Entwicklung des Magnesiums aus der festen Füllstoffmetallegierung vorliegt, reagieren $O_2$ und $H_2O$ mit dem Oxidfilm und bilden weiterhin ein Oxid oder ein Doppeloxid. Dies verhindert anschließend, daß der Promotor in geeigneter Weise mit dem ursprünglichen Oxidfilm reagiert, wenn sich die Porosität entwickelt. Infolgedessen fließt der Oxidfilm auf die Oberseit der verflüssigten Füllstoffmetallegierung und es tritt kaum eine Benetzung oder keine Benetzung des Grundmetalles auf. Bestimmte Maßnahmen sind deshalb notwendig, um die Ausbildung der Porosität im Oxidfilm zu verzögern.

Durch Anwendung der Massenspektrometrie wurde festgestellt, daß Magnesium zwei unterschiedliche Verdampfungsstöße aus der festen Füllstoffmetallegierung besitzt. Es wurde gefunden, daß der Oxidfilm unterhalb eines bestimmten kritischen Temperaturbereiches schüzend und porös oberhalb eines bestimmten kritischen Temperaturbereiches ist, und daß lediglich der Dampfphasentransport durch das poröse Oxid für das kinetische Verhalten der Magnesiumbenetzung maßgebend ist. Die Größe des Anfangsstroßeffektes ist ein Maßstab für den Aufbau der Magnesiumkonzentration an der Füllstoffmetall-Oxid-Grenzfläche, der während des Erhitzens vor der Ausbildung der Poren stattfindet. Eine langsame Geschwindigkeit der Erhitzung ruft den Stoßeffekt nicht hervor, vermutlich deshalb, weil der Transport des Magnesiums zur Grenzfläche in merklicher Geschwindigkeit und die Entwicklung von Poren gegenläufige Verfahren sind. Bei niedrigeren Temperaturen (im Bereich von 400 bis 500°C) steuert die Verdampfungsstufe oder der Zerfall von $Mg_2Si$ die Verfahrenskinetik. Beim raschen Erhitzen kann der Schutzoxidfilm in einem nicht porösen Zustand gegenüber höheren Temperaturen gehalten werden, wodurch das Ausmaß der Reaktion zwischen den gasförmigen Verunreinigungen und den Hartlöt- oder Schweißungspromotoren verringert wird.

Es wurde im Rahmen der Erfindung festgestellt, daß der Mechanismus der Füllstoffmetallbenetzung von den folgenden Eigenschaften abhängig ist:

(a) Der normalerweise nicht poröse Oxidfilm muß mit Poren ausgebildet werden, deren Bildung sowohl zeit- als auch temperaturabhängig ist. Zur Erläuterung entwickelt sich die anfängliche Porosität bei einer niedrigeren Temperaturgrenze von etwa 350°C bei Erhitzungsgeschwindigkeiten unterhalb 100°C/min und kann auf die Einleitung bei etwa 525°C bei Erhitzungsgeschwindigkeiten von 200°C/min beschränkt werden,

(b) der Transport des Magnesiumdampfes durch diese Porosität ist abhängig von dem Zustand der Füllstoffmetallegierung: (a) in der geschmolzenen Füllstoffmetallegierung ist der Transport rasch und (b) in der festen Füllstoffmetallegierung begrenzen die Dissoziation von $Mg_2Si$ und die Diffusion den Transport,

(c) am eutektischen Schmelzpunkt der Füllstoffmetallegierung (551°C) ergibt die Benetzung des Oxides eine Dochtwirkung des Füllstoffmetalles durch den porösen Oxidfilm, so daß sich eine saubere benetzbare Flüssigkeitsschicht auf der entgegengesetzten Seite derselben ergibt und

(d) oberhalb 565°C wird die Füllstoffmetallegierung vollständig geschmolzen, so daß eine makroskopische Strömung stattfindet.

Wie bereits früher dargelegt, ist diejenige Erscheinung, welche das Benetzungsfahren abbricht, die Anwesenheit der Dampfphasenbestandteile abbricht, die Anwesenheit der Dampfphasenbestandteile von $O_2$ und $H_2O$, welche, falls in ausreichend hohen Konzentrationen vorhanden, vollständig den Fortschritt der Eigenschaften (a) bis (d) ändern kann und dadurch eine schlechte Hartlötung oder Schweißung ergeben.

Magnesium wird selbstverständlich als wichtiges Element zur Überwindung dieser Bestandteile der Dampfphasen angesehen, da Magnesium als Fangmittel wirkt und eine hohe Flüchtigkeit und eine hohe Reaktivität mit $O_2$ und $H_2O$ hat. Trotz der physikalischen Eigenschaften des Magnesiums als

3

0 001 447

Fangmittel kann jedoch dessen Anwesenheit im Verfahren nicht vollständig diese Schädigung verhindern.

Gemäß der Erfindung wird, falls die im Temperaturbereich von 400 bis 500°C verbrachte Zeit auf 2 bis 2 min oder weniger abgekürzt wird, die Störung aufgrund der Dampfphasenbestand teile auf einen tolerierbaren Wert verringert. Bei der Vakuumhartlötung oder -schweißung ist die Aufrechterhaltung eines niedrigen Partialdruckes an Wasser und Sauerstoff ein wesentliches Erfordernis und ist für die Hochvakuumerfordernisse der bischer bekannten Verfahren verantwortlich. Durch Begrenzung der in diesem kritischen Temperaturbereich verbrachten Zeit ist es möglich, die Anfälligkeit des Verfahrens für derartige Verunreinigungen durch Begrenzung des Ausmaßes ihrer Reaktion mit dem Oxidfilm zu verringern. Es wurde gefunden, daß eine Erhitzungsgeschwindigkeit von etwa 100 bis 150°C je min im Temperaturbereich von 400 bis 565°C notwendig ist, um dieses Problem zu lösen und gleichzeitig die Anforderdnisse an die Vakuumapparatur zu verringern, so daß eine Vorpumpe für ein niedriges Vakuum die gesamte Apparatur ist, die für dieses Verfahren notwendig ist.

Gemäß der Erfindung wird also während des Hartlötens oder Schweißens Wärme in einer Geschwindigkeit von mindestens 100°C/min innerhalb des Temperaturbereiches von 400 bis 565°C angewandt. Dadurch ergibt sich eine verbesserte Hartlötung oder Schweißung von Aluminium in einer Umgebung, die die Gassorten von $O_2$ und/oder $H_2O$ enthält.

Infolgedessen stellt ein bevorzugtes Verfahren zur Ausführung gemäß der Erfindung das folgende dar:

1. Eine Struktur auf Aluminiumbasis wird durch Ausbildung von Blechen aus Vakuumhartlötplattierungslegierungen hergestellt. Die Plattierbleche werden zur üblichen Gestalt eines Wärmeaustauchers geformt und zusammengesetzt. Die Anordnung wird fixiert, um eine geeignete Stoßeinstellung während des Hartlöt- oder Schweißverfahrens aufrechtzuerhalten.

2. Die Füllstoffmetallegierung ist an den gewünschten Stoßstellen infolge des Verbundes der Bleche lokalisiert, wodurch die Füllstoffmetallegierung an Ort und Stelle vorliegt, ganz gleich, wo der Stoß angebracht ist. In Fällen, wokein plattiertes Blech angewandt wird, Muß die Füllstoffmetallegierung sorgfältig an den gewünschten Stellen abgeschieden werden.

3. Gemäß der Erfindung weden die strukturell zusammengesetzten Stammbauteile dann in einen Ofen zum Erhitzen gebracht, während sie an eine inerte Atmosphäre bei einem Vakuum von 0,13 Pa ausgesetzt werden; die Erhitzungsgeschwindigkeit muß kritisch so gesteuert werden, daß die Anordnung durch die Temperaturzone von 400 bis 590°C erhitzt wird. Die Erhitzungsgeschwindigkeit innerhalb dieser kritischen Zone muß mit einer Geschwindigkeit von 100 bis 150°C je min ablaufen.

4. Wenndie Anordnung 590°C erreicht hat, wird das Erhitzen weiterhin in niedrigerer Geschwindigkeit ausgeführt und die Anordnung wird auf die Hartlöt- oder Schweißtemperatur entsprechend den bekannten Verfahren des Standes der Technik erhöht.

Infolge der Ausführung der vorstehenden Reihenfolge der Stufen entwickelt der Oxidfilm eine Porosität anfänglich bei etwa 400°C; wenn das Erhitzen oberhalb dieser Temperatur fortschreitet, zersetzt sich das $Mg_2Si$, wodurch sich ausreichend Magnesium ansammelt und mit dem porösen Oxid reagiert. Falls die Temperatur weiterhin auf 561°C gesteigert wird, findet eine Dochtwirkung oder Kapillarbewegung des Füllstoffmaterials durch diese Porosität statt, selbst wenn die Füllstoffmetallegierung im halbschwammigen Zustand ist und zu viskos zu einer merklichen Strömung in dieser Stufe ist. Nachdem ein Temperaturwert von 565°C erreicht ist, wird die Füllstoffmetallegierung flüssiger und die erforderliche Strömung zur Stoßfüllung kann unter den üblichen Verfahren erreicht werden. Jedoch wird durch die Steuerung der Geschwindigkeit der Erhitzung die Störung durch die Bestandteile der Dampfphase praktisch vermieden und die Förderung der Benetzung der Aluminiumoberfläche durch die Füllstoffmetallegierung durch den Oxidfilm findet statt. Eine überlegene Qualität der Hartlötung oder Schweißung nach dem Vakuumverfahren kann dadurch mit Drücken innerhalb des Bereiches von 0,13 Pa erreicht werden.

Ein Alternativverfahren zum Erhitzen im Vakuum besteht im pulsierenden Erhitzen der Hartlöt- oder Schweißanordnung in einem Inertgas. Die Hartlöt- oder Schweißanordnung kann zwischen den Inertgasvolumen von unterschiedlich heißen Temperaturen transportiert werden oder es kann eine pulsierende Strahlungserhitzung angewandt werden. Jedoch wird eine Erhitzungsgeschwindigkeit von 100 bis 200°C/min während derjenigen Zeit eingehalten, wo die Anordnung eine Temperaturänderung im Bereich von 400 bis 590°C annimmt, so daß die Schädigung des Hartlöt- oder Schweißverfahrens durch $O_2$ und $H_2O$ vermieden wird. Wie bei der bevorzugten Ausführungsform reagiert der Magnesiumdampf mit dem Oxidfilm in dem Moment, wo der Film zum ersten Mal porös zu werden beginnt. Die Magnesiumatome werden selbst in die Poren des Filmes einverleibt und bilden einen Spinell (Mg-Al-Kationen im Oxidgitter). Dieser Spinell ist benetzbar und erlaubt, daß der halbflüssige Promotor durch Kapillarwirkung aufgenommen wird und dochtartig hindurchgesaugt wird.

Im Rahmen der Lehre der Erfindung, wobei zum Verbinden von Aluminium- oder Aluminiumlegierungsstoßstellen eine ternäre Füllstofflegierung auf Aluminiumbasis angewandt wird und die Anordnung bei einem relative hohen Druck von weniger als 0,13 Pa durch den Temperaturbereich von 400 bis 590°C mit einer Erhitzungsgeschwindigkeit von mindestens etwa 100°C/min, insbesondere 100 bis 150°C/min, innerhalb eines kurzen Zeitraumes erhitzt wird, ergeben sich einige spezielle, nachfolgend aufgeführte Ausführungsformen der Erfindung.

4

Ein Verfahren zum flußmittelfreien Hartlöten oder Schweißen von Aluminiumteilen, bei dem strukturell zusammengehörige Grundmetallteil aus Aluminium oder Legierungen hiervon hergestellt und zur Bildung einer Anordnung zusammengesetzt werden, eine promotorhaltige Füllstoffmetallegierung auf Al-Basis an den Stoßstellen der Anordnung abgeschieden wird und die Anordnung und die abgeschiedene Füllstoffmetallegierung einer Wärmebehandlung unterzogen werden, während sie einer inerten Umgebung oder einer Vakuumumgebung ausgesetzt sind, wobei (a) ein Promotor aus der Gruppe von Magnesium, seltenen Erdmetallen, Beryllium, Scandium, Yttrium, Calcium, Strontium und/oder Lithium verwendet wird, (b) die Wärme so angewandt wird, daß die Anordnung eine Temperatur im Bereich von 400 bis 590°C mit einer Erhitzungsgeschwindigkeit von mindestens 100°C erreicht, wobei der Zeitraum, währenddessen die Anordnung sich innerhalb des kritischen Temperaturbereiches befindet, weniger als 2 min ist, und (c) das Erhitzen jenseits dieses kritischen Bereiches zur Ausführung der Hartlötung oder Schweißung fortgesetzt wird. Vorteilhaft wird hierbei die Wärme durch Pulsierung aufgebracht, so daß die Ausbildung von Porosität in dem Oxidfilm auf den Grundmetallteilen als auch auf der Füllstoffmetallegierung verzögert wird, bis der Promotor aus der Füllstoffmetallegierung dissoziert, wobei die Wärmepulsierung speziell zur Ausbildung einer fluktuierenden Erhitzungsgeschwindigkeit zwischen 50°C/min bis oberhalb 100°C/min durchgeführt wird, wenn die Grundmetallteile bei einem Temperaturzustand niedriger als 545°C sind.

Weiterhin ein Verfahren zum flußmittelfreien Hartlöten oder Schweißen von Aluminiumteilen, bei dem strukturell zusammengehörige Grundmetallteile, die mindestens teilweise aus Aluminium oder einer Aluminiumlegierung bestehen, hergestellt und unter Bildung einer Anordnung zusammengesetzt werden, wobei eine im wesentlichen aus einer Aluminium-Silicium-Magnesium-Legierung bestehende Füllstoffmetallegierung abgeschieden wird, wobei das metall an den Stoßstellen der Anordnung abgeschieden ist und die Anordnung der vorstehend beschriebenen Erwärmung unterzogen wird, wodurch signifikante Reaktionen von gasförmigem Sauerstoff oder Wasser in der die Anordnung innerhalb des Ofens umgebenden Umgebung vermieden werden, und das Erhitzen der Anordnung oberhalb des kritischen Temperaturbereiches zur Hartlötung oder Schweißung fortgesetzt wird.

Ferner ein Verfahren zum Hartlöten oder Schweißen einer Anordnung mit Grundmetallteilen und einer magnesiumhaltigen Füllstoffmetallegierung, die an den Stoßstellen angebracht ist, wobei die Hartlöt- oder Schweißanordnung in einer inerten Atmosphäre oder einem Vakuum von weniger als 0,13 Pa auf eine Temperatur erhitzt wird, bei der der Oxidfilm auf den Grundmetallteilen Poren zu bilden beginnt, die Erhitzungsgeschwindigkeit so gesteuert wird, daß sie bei über 100°C/min liegt, bis die Metallteile eine Temperatur von 535°C überschreiten, und das Erhitzen der Anordnung fortgesetzt wird, bis die Metallteile durch die Füllstoffmetallegierung an den Stoßstellen benetzt sind.

## Patentansprüche

1. Verfahren zum flußmittelfreien Hartlöten oder Schweissen von Aluminiumteilen, wobei strukturell zusammengehörige Grundmetallteile aus Aluminium oder Legierungen hiervon hergestellt und zur Bildung einer Anordnung zusammengesetzt werden, eine promotorhaltige Füllstoffmetallegierung auf Aluminiumbasis an den Stoßstellen der Anordnung abgeschieden wird und die Anordnung und die abgeschiedene Füllstoffmetallegierung einer Wärmebehandlung unterzogen werden, während sie einer inerten Umgebung oder einer Vakuumumgebung ausgesetzt sind, dadurch gekennzeichnet, daß

a) ein Promotor aus der Gruppe von Magnesium, seltenen Erdmetallen, beryllium, Scandium, Yttrium, Calcium, Strontium und/oder Lithium verwendet wird,

b) die Wärme so angewandt wird, daß die Anordnung eine Temperatur im Bereich von 400 bis 590°C mit einer Erhitzungsgeschwindigkeit von mindestens 100°C/min erreicht, wobei der Zeitraum, währenddessen die Anordnung sich innerhalb dieses kritischen Temperaturbereiches befindet, weniger als 2 min beträgt, oder die Wärme durch Pulsierung aufgebracht wird, bis der Promotor aus der Füllstoffmetallegierung dissoziert, wobei die Wärmepulsierung speziell zur Ausbildung einer fluktuerenden Erhitzungsgeschwindigkeit zwischen 50°C/min big oberhalb 100°C/min durchgeführt wird, wenn die Grundmetallteile bei einem Temperaturzustand niedriger als 545°C sind und

c) das Erhitzen jenseits dieses kritischen Bereiches bzw. dieser kritischen Temperatur zur Ausführung der Hartlötung oder Schweißung fortgesetzt wird.

2. Verfahren nach Anspruch 1, dadurch gekennzeichnet, daß eine magnesiumhaltige Aluminiumlegierung als Füllstoffmetallegierung verwendet wird.

3. Verfahren nach Anspruch 1 oder 2, dadurch gekennzeichnet, daß eine Aluminium-Silicium-Magnesiumlegierung als Füllstoffmetallegierung verwendet wird und beim Durchgang durch einen kritischen Temperaturbereich von 400°C bis 565°C eine Erhitzungsgeschwindigkeit von 100 bis 150°C/min angewandt wird.

4. Verfahren nach Anspruch 1 bis 3, dadurch gekennzeichnet, daß ein Vakuumdruck von weniger als 0,13 Pa angewandt wird.

## Claims

1. Method of fluxless brazing of aluminium parts, while preparing and relating together struc-

# 0 001 447

turally related base metal parts consisting of aluminum or alloys thereof to form an assembly, depositing a promoter-containing aluminum based filler metal alloy at the joining sites of said assembly, and subjecting said assembly and said deposited filler metal to a heat treatment while exposed to an inert or vacuum environment, comprising:

a) using a promoter from the group consisting of magnesium, rare earth metals, beryllium, scandium, yttrium, calcium, strontium and/or lithium,

b) applying the heat so that when the assembly experiences a temperature in a range of 400 to 590°C the heating rate is at least 100°C per minute whereby the time period during which said assembly is in said critical temperature range is less than two minutes, or applying the heat by pulsing until said promoter dissociates from said filler metal alloy, said heat pulsing being carried out particularly to provide a fluctuating heating rate of between 50°C/minute to over 100°C/minute when the base metal parts are at a temperature condition less than 545°C, and

c) continuing said heating beyond said critical range of said critical temperature respectively to effect brazing.

2. Method according to claim 1, in which a magnesium-containing aluminum alloy is used as filler metal alloy.

3. Method according to claim 1 or 2, comprising using an aluminum-silicon-magnesium alloy as filler metal alloy, and when experiencing a temperature within a critical temperature range of 400°C to 565°C applying a heating rate of 100 to 150°C/minute.

4. Method according to claims 1 to 3, in which a vacuum pressure of less than 0.13 Pa is applied.

## Revendications

1. Procédé pour la brasure ou la soudure sans décapant de pièces d'aluminium, procédé dans lequel des pièces métalliques de base allant structurellement de pair, en alluminium ou bien en alliage d'aluminium, sont réalisées et assemblées pour constituer un ensemble, un alliage métallique de remplissage à base d'aluminium contenant un promoteur étant déposé aux points de contact de cet ensemble, et cet ensemble ainsi que l'alliage métallique de remplissage ainsi déposé étant soumis à un triatement thermique, pendant lequel ils sont exposés à un environnement inerte ou bien au vide, procédé caractérisé en ce que:

a) on utilise un promoteur du groupe du magnésium, des terres rates, du béryllium, du scandium, de l'yttrium, du calcium, du strontium et/ou du lithium.

b) la chaleur est mise en oeuvre de façon telle que l'ensemble atteint une température au voisinage de 400 à 590°C avec une vitesse d'échauffement d'au moins 100°C par minute, le laps de temps pendant lequel l'ensemble se trouve au voisinage de cette température critique étant de moins de 2 minutes, ou bien la chaleur étant appliquée par pulsations jusqu'à ce que le promoteur soit dissocié à partir de l'alliage métallique de remplissage, la pulsation de chaleur étant spécialement conduite pour obtenir une vitesse de pulsation fluctuante se situant entre 50°C par minute jusqu'au-delà de 100°C par minute, lorsque les pièces métalliques de base sont à une température inférieure à 545°C.

c) l'échauffement au-delà de cette zone critique ou bien de cette température critique, étant poursuivi en vue de réaliser la brasure ou bien la soudure.

2. Procédé selon la revendication 1, caractérisé en ce qu'on utilise un alliage d'aluminium contenant du magnésium en tant qu'alliage métallique de remplissage.

3. Procédé selon l'une quelconque des revendications 1 et 2, caractérisé en ce qu'un alliage d'aluminium, de silicium et de magnésium est utilisé comme alliage métallique de remplissage et que lors du passage par une zone de température critique de 400°C à 565°C, une vitesse d'échauffement de 100 à 150°C par minute, est utilisée.

4. Procédé selon l'une quelconque des revendications 1 à 3, caractérisé en ce qu'un vide inférieur à 0,13 Pa est appliqué.